Europäisches Patentamt

European Patent Office

Office européen des brevets

(19)

(11) Veröffentlichungsnummer: **0 191 894**

**B1**

(12) # EUROPÄISCHE PATENTSCHRIFT

(45) Veröffentlichungstag der Patentschrift:
12.07.89

(21) Anmeldenummer: **85109738.6**

(22) Anmeldetag: **02.08.85**

(51) Int. Cl.⁴: **F 16 J 15/32**

(54) **Kassettendichtung für Wellen.**

(30) Priorität: **16.02.85 DE 3505464**

(43) Veröffentlichungstag der Anmeldung:
**27.08.86 Patentblatt 86/35**

(45) Bekanntmachung des Hinweises auf die Patenterteilung:
**12.07.89 Patentblatt 89/28**

(84) Benannte Vertragsstaaten:
**AT BE DE FR GB IT NL SE**

(56) Entgegenhaltungen:
**DE-A-2 719 410**
**FR-A-2 296 800**
**GB-A-881 607**
**US-A-4 428 586**

(73) Patentinhaber: **Firma Carl Freudenberg, Höhnerweg 4, D-6940 Weinheim/Bergstrasse (DE)**

(72) Erfinder: **Hornberger, Jörg, Wormserstrasse 22, D-6905 Schriesheim (DE)**

(74) Vertreter: **Weissenfeld- Richters, Helga, Dr., Höhnerweg 2, D-6940 Weinheim/Bergstrasse (DE)**

EP 0 191 894 B1

LIBER, STOCKHOLM 1989

## Beschreibung

Die Erfindung betrifft eine Kassettendichtung für Wellen, umfassend einen Radialwellendichtring mit einem an dem nach innen weisenden, ersten Ringvorsprung des Versteifungsringes festgelegten Lippenring, bei der der Lippenring unter einer elastischen Vorspannung gleitend an einer sich in axialer Richtung erstreckenden und auf der Welle festgelegten Schonhülse anliegt, bei der die Schonhülse auf der von dem abgedichteten Raum abgewandten Seite des Lippenringes und innerhalb der axialen Erstreckung des Außenringes mit einem in radialer Richtung nach außen weisenden, zweiten Ringvorsprung versehen ist, bei der der erste Ringvorsprung durch eine elastische Schutzlippe gegenüber dem zweiten Ringvorsprung abgedichtet ist und bei der die Schutzlippe einen Bestandteil des zweiten Ringvorsprunges bildet, wobei die Schutzlippe eine im wesentlichen radiale Erstreckung aufweist und an einer von dem abgedichteten Raum abgewandten, axialen Begrenzungsfläche des ersten Ringvorsprunges anliegt.

Eine solche Kassettendichtung ist aus der GB-A-881 607 bekannt. Der zweite Ringvorsprung ist auf der dem abgedichteten Raum zugewandten Seite mit Ausnehmungen versehen, welche radial nach außen sowie in axialer Richtung offen sind. Bei sich drehender Welle wird hierdurch eine gute Wirksamkeit nur dann erzielt, wenn die miteinander in Eingriff stehenden Teile des Innen- und des Außenringes einander in einer ganz präzisen Weise zugeordnet sind. Die Anwendung aufwendiger Justierarbeiten während der Montage ist daher unverzichtbar. Sie ist wenig hilfreich, wenn sich bei laufender Welle eine axiale Relativverlagerung des Innenringes in bezug auf den Außenring ergeben kann.

Daneben kann auch bei Wellenstillstand Staub aus der Umgebung bis in den unmittelbaren Bereich des die dynamische Abdichtung bewirkenden Lippenringes vordringen und eine vorzeitige Zerstörung desselben bei Inbetriebnahme der Dichtung bewirken.

Der Erfindung liegt die Aufgabe zugrunde, eine Kassettendichtung der eingangs genannten Art derart weiterzuentwickeln, daß das Eindringen von Verschmutzungen in den Innenraum der Kassettendichtung wirksam verhindert wird ohne daß es der Anwendung von Justierarbeiten im Anschluß an die Montage der Kassettendichtung bedarf. Des weiteren soll die erfindungsgemäße Kassettendichtung weitgehend unabhängig von evtl. axialen Verlagerungen der abgedichteten Welle und/oder von evtl. Verschleiß eine gute Wirksamkeit aufweisen.

Diese Aufgabe wird erfindungsgemäß bei einer Kassettendichtung der eingangs genannten Art dadurch gelöst, daß der zweite Ringvorsprung auf der dem abgedichteten Raum zu- und/oder abgewandten Seite mit gleichmäßig auf seinem Umfang verteilten Ausnehmungen versehen ist, daß die Ausnehmungen in Umfangsrichtung durch schaufelähnlich ausgebildete Vorsprünge des zweiten Ringvorsprunges gebildet sind und radial nach außen sowie in axialer Richtung offen sind und daß die Vorsprünge einstückig mit der Schutzlippe aus elastischem Werkstoff geformt sind.

Der von der Schutzlippe berührte Teil der axialen Begrenzungsfläche des ersten Ringvorsprunges hat vorzugsweise eine radiale Erstreckung und wird von der sich in radialer Richtung erstreckenden Schutzlippe zumindest teilweise überlappt.

Die Gewährleistung einer präzisen gegenseitigen Zuordnung zwischen dem ersten Ringvorsprung und der Schutzlippe setzt daher nicht eine voneinander unabhängige Einpressung des Radialwellendichtringes und der Schonhülse voraus, sondern es genügt, wenn die für den Einbau des Radialwellendichtringes erforderlichen Kräfte während des Einbaues der Schonhülse durch Anpressung der Schutzlippe an den ersten Ringvorsprung auf den Außenring übertragen werden. Eine spezielle Justierung ist während oder im Anschluß an die Montage nicht mehr nötig.

Zwischen der Schonhülse und der Oberfläche der abgedichteten Welle kann eine elastisch nachgiebige Schicht angeordnet sein, welche ggf. einstückig mit der Schutzlippe ausgebildet ist. Hierdurch ergibt sich bei Nachlassen der Einpreßkräfte eine gewisse Rückfederung der Schonhülse in axialer Richtung, was einer Verminderung der durch den Einpreßvorgang verursachten gegenseitigen Verpreßung zwischen dem ersten Ringvorsprung und der Schutzlippe zur Folge hat. Die Anordnung einer entsprechenden Schicht wirkt sich unsofern verschleißmindernd auf die Schutzlippe aus, was insbesondere während der Inbetriebnahmezeit von großem Vorteil ist.

Der zweite Ringvorsprung ist flüssigkeitsundurchlässig ausgebildet und durch die Schonhülse flüssigkeitsdicht auf der Oberfläche der abgedichteten Welle festgelegt. Er bildet zugleich den Träger für die eigentliche Schutzlippe, welche gleitend an dem ersten Ringvorsprung anliegt und gegenüber diesem eine wirksame Abdichtung gewährleistet. Der diesbezügliche Effekt wird maßgeblich durch die in wenigstens einer der beiden Stirnflächen des zweiten Ringvorsprunges angeordneten Ausnehmungen unterstützt, die radial nach außen sowie in axialer Richtung offen sind. Die Ausnehmungen sind gleichmäßig auf der jeweiligen Stirnfläche verteilt, sie haben je nach Anordnungsposition eine unterschiedliche Wirksamkeit.

In Fällen, in denen die Ausnehmungen auf der dem abgedichteten Raum zugewandten Seite des zweiten Ringvorsprunges angeordnet sind und somit in den Zwischenraum zwischen den zweiten Ringvorsprung und der eigentlichen Dichtlippe eingreifen, haben die Ausnehmungen vor allem den Zweck, in den Zwischenraum eingedrungene Fremdkörper aus demselben wieder herauszufördern. Die Fremdkörper können daher nicht einen verstärkten Verschleiß der eigentlichen Dichtlippe zur Folge haben.

In Fällen, in denen die Ausnehmungen auf der dem abgedichteten Raum zugewandten Seite des zweiten Ringvorsprunges angeordnet sind, wird durch deren Anbringung vor allem der Zweck verfolgt, auf die Außenseite auftreffende Frendstoffe unter Ausnutzung der durch die Wellenumdrehung verursachten Fliehkräfte nach außen zu schleudern und auf diese Weise deren Anbackung im Bereich der Schutzlippe zu behindern. Die Gebrauchsdauer der Schutzlippe erfährt hierdurch eine wesentliche Verbesserung.

Die Ausnehmungen werden in Umfangsrichtung durch schaufelähnlich ausgebildete Vorsprünge des zweiten Ringvorsprunges begrenzt. Sie haben bei wechselnder Drehrichtung der abgedichteten Welle zweckmäßig eine radiale Erstreckung. Eine entsprechende Ausführung läßt sich besonders kostengünstig herstellen. Eine evolventenförmige Begrenzung ist ebenfalls möglich. Sie empfiehlt sich vor allem dann, wenn die abgedichtete Welle stets in gleicher Richtung umläuft.

Die Vorsprünge können ein entgegen ihrer Bewegungsrichtung keilförmig geneigtes Profil haben. Hierdurch wird das Auftreten von Anbackungen wirksam verhindert. Bevorzugte Winkel liegen in dem Bereich zwischen 45 und 60°.

Die Vorsprünge sind einstückig mit der Schutzlippe aus elastomerem Werkstoff geformt. Hierdurch wird wirksam verhindert, daß sich bei plötzlich auftretenden Überlastungen eine Beschädigung ergibt.

Die Vorsprünge können bei einer Anbringung auf der von dem abgedichteten Raum abgewandten Seite des zweiten Ringvorsprunges mit einer nach außen weisenden Verlängerung versehen sein, die sich radial bis in den Bereich der Schutzlippe erstreckt. Hierdurch wird in Abhängigkeit von der Belastung der Außenseite eine zunehmende Anpressung der Schutzlippe an den zweiten Ringvorsprung erreicht, was vorteilhaft ist in Hinblick auf die Vermeidung des Eindringens von Fremdkörpern in das Innere der Kassettendichtung. Die Wirksamkeit läßt sich weiter steigern, wenn die Verlängerungen der Vorsprünge die Schutzlippe außenseitig umgreifen. Auch in dem der dynamischen Abdichtungszone der Schutzlippe unmittelbar benachbarten Bereich wird hierdurch die Entstehung von Anbackungen wirksam verhindert, was die Gebrauchsdauer verlängert.

In der in der Anlage beigefügten Zeichnung ist eine beispielhafte Beispielsform der erfindungsgemäß vorgeschlagenen Kassettendichtung halbgeschnitten dargestellt:

Die gezeigte Kassettendichtung stellt eine in sich geschlossene Baueinheit dar, die nur als Gesamtheit ein- und ausgebaut werden kann. Sie umfaßt einen Außen- und einen Innenring, die relativ verdrehbar ineinander liegend angeordnet und durch Dichtlippen gegeneinander abgedichtet sind. Der Außenring ruht unter normalen Betriebsbedingungen in einer aufnehmenden Gehäusebohrung, der Innenring auf der Oberfläche der relativ zu der Gehäusebohrung verdrehbaren Welle.

Bei dem gezeigten Ausführungsbeispiel ist der Außenring in Anlehnung an übliche Radialwellendichtringe ausgebildet. Er trägt ebenso wie diese an dem nach innen weisenden ersten Ringvorsprung 6 die eigentliche Dichtlippe 7 aus gummielastischem Werkstoff, die axial in Richtung des abgedichteten Raumes vorspringt und unter einer in radialer Richtung wirksamen elastischen Vorspannung an der einen Bestandteil des Innenringes bildenden Schonhülse 8 anliegt. Die Dichtlippe 7 ist im rückwärtigen Bereich mit tandemartig hintereinander geschalteten Staublippen 9 versehen. Diese enthalten ebenfalls Dichtkanten, die unter einer elastischen Vorspannung an der Schonhülse 8 anliegen.

Der die vorstehend beschriebenen Dichtlippen 7, 9 erste Ringvorsprung weist ein in Richtung des abgedichteten Raumes eingewölbtes Profil auf, wodurch auf seiner Außenseite ein kreisringsförmiger Freiraum entsteht, in den der zweite Ringvorsprung 2 des Innenringes eingreift. Dieser weist zwei Schutzlippen 1 auf, von denen die äußere eine radiale Erstreckung aufweist und an einer sich in radialer Richtung erstreckenden Fläche des ersten Ringvorsprunges 6 anliegt. Die dynamische Abdichtungszone der Schutzlippe 1 erstreckt sich in diesem Bereich somit in radialer Richtung, wodurch das Eindringen von Verschmutzungen in den Innenraum der Kassettendichtung wirksam verhindert wird.

Der Ringvorsprung 2 ist auf der dem abgedichteten Medium zugewandten Seite und auf der von dieser Richtung abgewandten Seite mit gleichmäßig auf dem Umfang verteilten, axialen Vorsprüngen 4, 5 versehen, die zugleich eine radiale Erstreckung haben. Auftreffende Fremdstoffe werden dadurch nach außen gefördert, was die Wirksamkeit der Schutzlippe 1 ebenso begünstigt wie die Selbstreinigung der Kassettenrichtung von evtl. eingedrungenen Fremdstoffen.

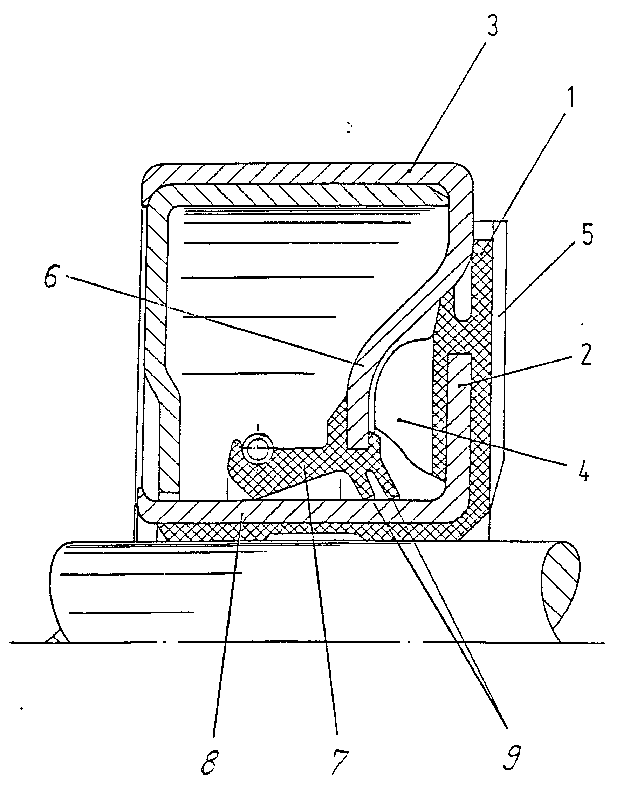

**Patentansprüche**

1. Kassettendichtung für Wellen, umfassend einen Radialwellendichtring mit einen an dem nach innen weisenden, ersten Ringvorsprung (6) des Versteifungsringes (3) festgelegten Lippenring (7) bei der der Lippenring (7) unter einer elastischen Vorspannung gleitend an einer sich in axialer Richtung erstreckenden und auf der Welle festgelegten Schonhülse 8 anliegt, bei der die Schonhülse auf der von dem abgedichteten Raum abgewandten Seite des Lippenringes und innerhalb der axialen Erstreckung des Außenringes mit einem in radialer Richtung nach außen weisenden, zweiten Ringvorsprung 2 versehen ist, bei der der erste Ringvorsprung 6 durch eine elastische Schutzlippe gegenüber dem zweiten Ringvorsprung abgedichtet ist, und bei der die Schutzlippe einen Bestandteil des zweiten Ringvorsprunges (2) bildet, wobei die Schutzlippe (1) eine im wesentlichen radiale Erstreckung aufweist und an einer von dem abgedichteten Raum abgewandten, axialen Begrenzungsfläche des ersten Ringvorsprunges (6) anliegt, dadurch gekennzeichnet, daß der zweite Ringvorsprung auf der dem abgedichteten Raum zu- und/oder abgewandten Seite mit gleichmäßig auf seinem Umfang verteilten Ausnehmungen versehen ist, daß die Ausnehmungen in Umfangsrichtung durch schaufelähnlich ausgebildete Vorsprünge (4, 5) des zweiten Ringvorsprunges (2) begrenzt sind und radial nach außen sowie in axialer Richtung offen sind und daß die Vorsprünge (4, 5) einstückig mit der Schutzlippe (1) aus elastischem Werkstoff geformt sind.

2. Kassettendichtung nach Anspruch 1, dadurch gekennzeichnet, daß die von dem abgedichteten Raum abgewandten Vorsprünge (5) ein entgegen ihrer Bewegungsrichtung keilförmig geneigtes Profil haben.

3. Kassettendichtung nach Anspruch 1 bis 2, dadurch gekennzeichnet, daß die Vorsprünge (5) auf der von dem abgedichteten Raum abgewandten Seite des zweiten Ringvorsprunges (2) angeordnet sind und eine Verlängerung aufweisen, die sich radial bis in den Bereich der Schutzlippe (1) erstreckt.

4. Kassettendichtung nach Anspruch 3, dadurch gekennzeichnet, daß die Verlängerung die Schutzlippe (1) außenseitig umgreift.

## Claims

1. A box seal for shafts, comprising a radial shaft sealing ring with a lip ring (7) fixed on the inwardly pointing, first annular projection (6) of the reinforcing ring (3), in which the lip ring (7) bears under a resilient prestress slidingly on a protective sleeve (8) extending in axial direction and fixed on the shaft, in which the protective sleeve is provided on the side of the lip ring remote from the sealed-off space and within the axial extent of the outer ring with a second annular projection (2) pointing outwards in radial direction, in which the first annular projection (6) is sealed off with respect to the second annular projection by a resilient guard lip, and in which the guard lip forms a component part of the second annular projection (2), the guard lip (1) having a substantially radial extent and bearing against an axial limiting surface of the first annular projection (6) remote from the sealed-off space, characterised in that the second annular projection is provided on the side towards and/or the side remote from the sealed-off space with recesses evenly distributed over its circumference, in that the recesses are bounded in circumferential direction by blade-like projections (4, 5) of the second annular projection (2) and are open radially outwards and in axial direction, and in that the projections (4, 5) are formed integrally with the guard lip (1) from flexible material.

2. A box seal according to claim 1, characterised in that the projections (5) remote from the sealed-off space have a profile which is inclined in the form of a wedge against their direction of movement.

3. A box seal according to either of claims 1 or 2, characterised in that the projections (5) are arranged on the side of the second annular projection (2) remote from the sealed-off space and have an extension which extends radially into the region of the guard lip (1).

4. A box seal according to claim 3, characterised in that the extension embraces the guard lip (1) on the outside.

## Revendications

1. Joint d'étanchéité pour arbre comprenant une bague d'étanchéité radiale pour arbre avec une bague à lèvre (7) fixée à une première saillie annulaire (6) tournée vers l'intérieur de la bague de renfort (3), dans lequel la bague à lèvre (7) appuie avec glissement et sous précontrainte élastique sur un manchon d'usure (8) fixé à l'arbre et s'étendant en direction axiale, dans lequel le manchon d'usure est pourvu d'une seconde saillie annulaire (2) tournée vers l'extérieur en direction radiale et sur le côté de la bague à lèvres opposé à l'enceinte à contenir et dans l'extension axiale de la bague extérieure, dans lequel la première saillie annulaire (6) est rendue étanche par rapport à la seconde saillie annulaire par une lèvre de protection élastique et dans lequel la lèvre de protection constitue un élément de la seconde saillie annulaire (2), tandis que la lèvre de protection (1) présente une protection essentiellement radiale et appuie sur une surface limite axiale et opposée à l'enceinte à rendre étanche de la première saillie annulaire (6), caractérisé en ce que la seconde saillie annulaire est pourvue de cavités réparties uniformément sur sa périphérie sur le côté tourné vers et/ou opposé à l'enceinte à rendre étanche, en ce que les cavités sont limitées en direction de la périphérie par des saillies (4, 5) de la seconde saillie annulaire (2) qui présentent une forme en aube et qui sont ouvertes radialement vers l'extérieur ainsi qu'en direction axiale, et en ce que les saillies (4, 5) sont réalisées en matériau élastique et d'une pièce avec la lèvre de protection (1).

2. Joint pour arbre selon la revendication 1, caractérisé en ce que les saillies (5) opposées à l'enceinte à rendre étanche ont un profil incliné en forme de coin opposé à leur sens de déplacement.

3. Joint pour arbre selon les revendications 1 et 2, caractérisé en ce que les saillies (5) sont disposées sur le côté à l'enceinte à rendre étanche de la seconde saillie annulaire (2) qui s'étend radialement jusque dans la zone de la lèvre de protection (1).

4. Joint pour arbre selon la revendication 1, caractérisé en ce que le prolongement entoure extérieurement la lèvre de protection (1).